# EUROPÄISCHE PATENTSCHRIFT

(11) **EP 3 875 261 B1**
(45) Veröffentlichungstag und Bekanntmachung des Hinweises auf die Patenterteilung: **16.10.2024**
(21) Anmeldenummer: 20213648.7
(22) Anmeldetag: 14.12.2020
(51) Int. Cl.: B29D 30/52, B29D 30/38, D03D 15/533, D03D 1/00, B60C 19/08

(54) **VERFAHREN ZUR HERSTELLUNG EINER ELEKTRISCH LEITFÄHIGEN REIFENKOMPONENTE UND REIFENKOMPONENTE**
METHOD FOR PRODUCING A ELECTRICALLY CONDUCTIVE TYRE COMPONENT AND TYRE COMPONENT
PROCÉDÉ DE FABRICATION D'UN COMPOSANT DE PNEU ELECTROCONDUCTEUR ET COMPOSANT DE PNEU

(30) Priorität: 06.03.2020 DE 102020202898
(43) Veröffentlichungstag der Anmeldung: 08.09.2021
(73) Patentinhaber: Continental Reifen Deutschland GmbH, 30175 Hannover (DE)
(72) Erfinder: Wenckel, Mathias, 30419 Hannover (DE); Arendt, Carsten, 30419 Hannover (DE); Kastens, Sven, 30419 Hannover (DE)
(74) Vertreter: Continental Corporation

(56) Entgegenhaltungen:
- EP-A1- 3 088 215
- EP-A1- 3 489 042
- EP-A2- 0 655 321
- WO-A1-2017/088994
- DE-A1- 102006 036 406
- DE-A1- 102010 037 328
- US-A1- 2017 197 480

## Beschreibung

Die Erfindung betrifft ein Verfahren zur Herstellung einer elektrisch leitfähigen Reifenlomponente sowie eine nach dem Verfahren hergestellte Reifenkomponente.

Die Erfindung geht aus von einem Verfahren zur Herstellung einer elektrisch leitfähigen Reifenkomponente, aufweisend die folgenden Schritte:
- Bereitstellen einer Reifenkomponente, wobei die Reifenkomponente aus einer kautschukbasierten Mischung ausgebildet ist;
- Bereitstellen eines ersten elektrisch leitfähigen Elementes und eines zweiten elektrisch leitfähigen Elementes.

Aus dem Stand der Technik sind Verfahren zur Herstellung elektrisch leitfähiger Reifenkomponenten bekannt. Dabei ist es aus dem Stand der Technik beispielsweise bekannt, elektrisch leitfähige Materialien durch elektrisch nicht leitfähige Reifenkomponenten hindurch zu legen.

Hintergrund ist, dass eine elektrische Leitfähigkeit eines Reifens, der eine an sich elektrisch nicht leitfähige Reifenkomponente aufweist, ermöglicht werden soll. Ziel ist es dabei insbesondere, einen Reifen bereitzustellen, über den elektrische Ströme von einem Fahrzeug auf eine Fahrbahn geleitet werden können. Bei dem Fahrzeug handelt es sich um das Fahrzeug, an dem der Reifen verwendet wird, bei der Fahrbahn handelt es sich um die Fahrbahn, auf der der Reifen rollt.

Beispielsweise wird in der US 2017/197480 A1 ein Verfahren zur Herstellung einer elektrisch leitfähigen Reifenkomponente offenbart.

Bei den aus dem Stand der Technik bekannten Verfahren zur Herstellung einer elektrisch leitfähigen Reifenkomponente könnte die Anordnung der elektrisch leitfähigen Materialien innerhalb der Reifenkomponente mit einem derartigen technischen Aufwand verbunden sein, dass Produktionsabläufe, in deren Rahmen Reifen hergestellt werden sollen, durch das Anordnen der elektrisch leitfähigen Materialien innerhalb der Reifenkomponente verlangsamt werden. Das Verfahren zur Herstellung einer elektrisch leitfähigen Reifenkomponente könnte hinsichtlich seiner Durchführungsgeschwindigkeit nicht optimal ausgestaltet sein. Bei der Durchführungsgeschwindigkeit handelt es sich um die Geschwindigkeit, mit der das Verfahren durchgeführt wird

Der Erfindung liegt die Aufgabe zugrunde, ein Verfahren zur Herstellung einer elektrisch leitfähigen Reifenkomponente bereitzustellen, dass schneller durchgeführt werden kann, als die aus dem Stand der Technik bekannten Verfahren.

Gelöst wird die gestellte Aufgabe durch das Verfahren zur Herstellung einer elektrisch leitfähigen Reifenkomponente nach Anspruch 1, dass die folgenden Schritte umfasst:
- Bereitstellen einer Nahterzeugungsvorrichtung, wobei die Nahterzeugungsvorrichtung dazu vorgesehen ist, das erste elektrisch leitfähige Element und das zweite elektrisch leitfähige Element in die Reifenkomponente einzunähen und dabei das erste elektrisch leitfähige Element mit dem zweiten elektrisch leitfähigen Element derart zu vernähen, dass das erste elektrisch leitfähige Element in Kontakt mit dem zweiten elektrisch leitfähigen Element steht;
- Einnähen des ersten elektrisch leitfähigen Elementes und des zweiten elektrisch leitfähigen Elementes in die Reifenkomponente mittels der Nahterzeugungsvorrichtung, wobei durch das Einnähen Bereiche des ersten elektrisch leitfähigen Elementes auf ersten Oberflächenbereichen einer ersten Oberfläche der Reifenkomponente angeordnet werden und Bereiche des zweiten elektrisch leitfähigen Elementes auf zweiten Oberflächenbereichen einer zweiten Oberfläche der Reifenkomponente angeordnet werden, derart, dass die Bereiche des ersten elektrisch leitfähigen Elementes und des zweiten elektrisch leitfähigen Elementes elektrisch leitfähig miteinander verbunden sind.

Durch das erfindungsgemäße Verfahren wird ein Verfahren zur Herstellung einer elektrisch leitfähigen Reifenkomponente ermöglicht und bereitgestellt, mittels dem auf raschere Art eine elektrisch leitfähige Reifenkomponente hergestellt werden kann, als es bei aus dem Stand der Technik bekannten Verfahren der Fall ist. Hintergrund ist, dass mittels dieses Verfahrens des Einnähens mittels der Nahterzeugungsvorrichtung ein elektrisch leitfähiges Element mit einem anderen elektrisch leitfähigen Element derart automatisiert und rasch in einer Reifenkomponente vernäht und verbunden werden kann, dass eine elektrisch leitfähige Verbindung durch die Reifenkomponente hindurch ermöglicht wird.

Die elektrische Leitfähigkeit der Reifenkomponente ist nach Anwendung des Einnähverfahrens und dadurch, dass das erste elektrisch leitfähige Element mit dem zweiten elektrisch leitfähigen Element in Kontakt gebracht wird, sichergestellt.

Durch den Umstand, dass das das erste elektrisch leitfähige Element mit dem zweiten elektrisch leitfähigen Element in Kontakt gebracht wird, wird eine elektrische Kopplung des ersten elektrisch leitfähigen Elementes mit dem zweiten elektrisch leitfähigen Element bewirkt.

Somit wird ein verbessertes Verfahren zur Herstellung einer elektrisch leitfähigen Reifenkomponente bereitgestellt.

Die Erfindung betrifft ferner eine Reifenkomponente, die nach einem erfindungsgemäßen Verfahren hergestellt worden ist.

Die Erfindung betrifft ferner einen Reifen, aufweisend mindestens eine erfindungsgemäße Reifenkomponente.

Bei dem Reifen handelt es sich beispielsweise um einen PKW-Reifen, um einen LKW-Reifen oder um einen Zweirad-Reifen.

Weitere vorteilhafte Ausgestaltungsformen der vorliegenden Erfindung sind Gegenstand der Unteransprüche.

Gemäß einer nächsten vorzugsweisen Ausgestaltungsform des erfindungsgemäßen Verfahrens handelt es sich bei dem ersten elektrisch leitfähigen Element und dem zweiten elektrisch leitfähigen Element um ein Garn oder um einen Draht.

Bei dem Garn oder dem Draht handelt es sich beispielsweise um ein Stahl garn oder ein Kupfergarn beziehungsweise um einen Stahldraht oder einen Kupferdraht.

Durch den erfindungsgemäßen Umstand, wonach es sich bei dem ersten elektrisch leitfähigen Element und dem zweiten elektrisch leitfähigen Element um ein Garn oder um einen Draht handelt, werden elektrisch leitfähige Elemente bereitgestellt, die zuverlässig und aufwandsarm mittels der Nahterzeugungsvorrichtung in der Reifenkomponente vernäht und miteinander in Kontakt gebracht werden können.

Gemäß einer nächsten vorzugsweisen Ausgestaltungsform des erfindungsgemäßen Verfahrens sind das erste elektrisch leitfähige Element und das zweite elektrisch leitfähige Element jeweils aus einem Polyester ausgebildet, wobei das Polyester eine Rußbeschichtung aufweist oder das Polyester mit einer Karbon-Litze umwickelt worden ist oder das Polyester mit einer Kupfer-Litze umwickelt worden ist oder das Polyester mit einer Stahl-Litze umwickelt worden ist.

Durch den erfindungsgemäßen Umstand, wonach das erste elektrisch leitfähige Element und das zweite elektrisch leitfähige Element jeweils aus einem Polyester ausgebildet sind, wobei das Polyester eine Rußbeschichtung aufweist oder das Polyester mit einer Karbon-Litze umwickelt worden ist oder das Polyester mit einer Kupfer-Litze umwickelt worden ist oder das Polyester mit einer Stahl-Litze umwickelt worden ist, werden elektrisch leitfähige Materialien verwendet, die den mechanischen Belastungen, die während eines regulären Betriebs des Reifens auftreten können, standhalten können und die zugleich eine ausreichende elektrische Leitfähigkeit aufweisen.

Hintergrund des Umstands, dass die elektrisch leitfähigen Elemente den mechanischen Belastungen standhalten können, sind die mechanischen und chemischen Eigenschaften des Polyesters.

Hintergrund der ausreichenden elektrischen Leitfähigkeit sind die physikalischen Eigenschaften der Rußbeschichtung, der Karbon-Litze, der Kupfer-Litze und der Stahl-Litze.

Sowohl eine Rußbeschichtung, als auch Karbon, Kupfer oder Stahl besitzen eine ausreichende elektrische Leitfähigkeit. Ausreichend ist die elektrische Leitfähigkeit insbesondere dann, wenn elektrische Ströme, die in einem Fahrzeug, an dem die erfindungsgemäße Reifenkomponente verwendet wird, auftreten über die Reifenkomponente zu einer Fahrbahn abgeleitet werden können.

Gemäß einer nächsten vorzugsweisen Ausgestaltungsform der vorliegenden Erfindung werden das erste elektrisch leitfähige Element und das zweite elektrisch leitfähige Element jeweils in einem Stichabstand von 3 cm bis 10 cm in die Reifenkomponente eingenäht.

Durch den erfindungsgemäßen Umstand, wonach das erste elektrisch leitfähige Element und das zweite elektrisch leitfähige Element jeweils in einem Stichabstand von 3 cm bis 10 cm in die Reifenkomponente eingenäht werden, können das erste elektrisch leitfähige Element und das zweite elektrisch leitfähige Element miteinander vernäht werden. Zugleich wird die Reifenkomponente aufgrund des Stichabstandes von 3 cm bis 10 cm in einem vertretbaren Maß durch den Nähvorgang belastet.

Während des Nähvorgangs bewegt sich die Nahterzeugungsvorrichtung relativ zu der Reifenkomponente. Die Bewegung ist dabei gleichförmig. Der Stichabstand ist dann ein Abstand in eine Richtung parallel zu dieser relativen Bewegung der Nahterzeugungsvorrichtung zu der Reifenkomponente.

Gemäß einer nächsten vorzugsweisen Ausgestaltungsform der vorliegenden Erfindung werden das erste elektrisch leitfähige Element und das zweite elektrisch leitfähige Element derart durch die Reifenkomponente genäht, dass durch das Einnähen Bereiche des ersten elektrisch leitfähigen Elements auf Oberflächenbereichen der ersten Oberfläche der Reifenkomponente angeordnet werden und Bereiche des zweiten elektrisch leitfähigen Elementes auf Oberflächenbereichen der zweiten Oberfläche der Reifenkomponente angeordnet werden. Ein Normalvektor der ersten Oberfläche und ein Normalvektor der zweiten Oberfläche weisen in entgegengesetzte Richtungen.

Gemäß einer nächsten vorzugsweisen Ausgestaltungsform des vorliegenden Verfahrens werden für den Fall, wonach die Reifenkomponente Festigkeitsträger aufweist, das erste elektrisch leitfähige Element und das zweite elektrisch leitfähige Element derart durch die Reifenkomponente genäht, dass eine Nahtrichtung mit einer Haupterstreckungsrichtung der Festigkeitsträger einen Winkel von 80° bis 100° und insbesondere 90° einschließt.

Bei den Festigkeitsträgern kann es sich um Festigkeitsträger eines Reifengürtels oder einer Reifenkarkasse handeln. Bei der Nahtrichtung handelt es sich um eine Richtung, die parallel zu der Richtung verläuft, in die die Relativbewegung der Nahterzeugungsvorrichtung und der Reifenkomponente weist.

Durch den erfindungsgemäßen Umstand, wonach für den Fall, wonach die Reifenkomponente Festigkeitsträger aufweist, das erste elektrisch leitfähige Element und das zweite elektrisch leitfähige Element derart durch die Reifenkomponente genäht werden, dass eine Nahtrichtung mit einer Haupterstreckungsvorrichtung der Festigkeitsträger einen Winkel von 80° bis 100° und insbesondere 90° einschließt, können das erste elektrisch leitfähige Element und das zweite elektrisch leitfähige Element derart an oder in der Reifenkomponente angeordnet werden, dass eine vorteilhafte Wechselwirkung mit den Festigkeitsträgern ermöglicht wird.

Gemäß des erfindungsgemäßen Verfahrens wird die Reifenkomponente kalandriert und das erste elektrisch leitfähige Element und das zweite elektrisch leitfähige Element derart durch die Reifenkomponente genäht, dass eine Nahtrichtung mit einer Kalandrierrichtung der Reifenkomponente einen Winkel von 80° bis 100° und insbesondere 90° einschließt.

Bei einer Kalandrierrichtung handelt es sich um die Richtung, in die eine Reifenkomponente durch einen Kalander hindurch kalandriert wird oder kalandriert worden ist.

Durch den erfindungsgemäßen Umstand, wonach die Reifenkomponente kalandriert wird oder kalandriert worden ist, das erste elektrisch leitfähigen Element und das zweite elektrisch leitfähige Element derart durch die Reifenkomponente genäht werden, dass eine Nahtrichtung mit einer Kalandrierrichtung der Reifenkomponente einen Winkel von 80° bis 100° und insbesondere 90° einschließt, können das erste elektrisch leitfähige Element und das zweite elektrisch leitfähige Element derart an oder in der Reifenkomponente angeordnet werden, dass eine vorteilhafte Wechselwirkung mit beispielsweise bereits an der Reifenkomponente angeordneten elektrisch leitfähigen Elementen oder bereits an der Reifenkomponente angeordneten elektrisch leitfähigen Komponenten ermöglicht wird.

Gemäß einer nächsten vorzugsweisen Ausgestaltungsform des erfindungsgemäßen Verfahrens werden das erste elektrisch leitfähige Element und das zweite elektrisch leitfähige Element in einzelnen Nahtreihen durch die Reifenkomponente genäht, wobei die Nahtreihen parallel zueinander verlaufen und einen Abstand voneinander aufweisen, wobei der Abstand insbesondere 30 cm bis 50 cm beträgt.

Gemäß einer nächsten vorzugsweisen Ausgestaltungsform des erfindungsgemäßen Verfahrens handelt es sich bei der Reifenkomponente um eine Reifenkarkasse oder um einen Reifengürtel.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung einer erfindungsgemäßen Nahterzeugungsvorrichtung zur Durchführung eines erfindungsgemäßen Verfahrens und einer Reifenkomponente;
Fig. 2: eine schematische Darstellung einer erfindungsgemäßen Nahterzeugungsvorrichtung zur Durchführung eines erfindungsgemäßen Verfahrens und einer Reifenkomponente;
Fig. 3: eine schematische Darstellung einer erfindungsgemäßen Nahterzeugungsvorrichtung zur Durchführung eines erfindungsgemäßen Verfahrens und einer Reifenkomponente gemäß einer weiteren Ausführungsform;
Fig. 4: eine schematische Darstellung einer erfindungsgemäßen Nahterzeugungsvorrichtung zur Durchführung eines erfindungsgemäßen Verfahrens und einer Reifenkomponente gemäß einer weiteren Ausführungsform;
Fig. 5: eine schematische Darstellung einer Nahterzeugungskomponente zur Durchführung eines erfindungsgemäßen Verfahrens und einer Reifenkomponente gemäß einer weiteren Ausführungsform;
Fig. 6: eine schematische Darstellung eines erfindungsgemäßen Reifens;
Fig. 7: eine schematische Darstellung eines elektrisch leitfähigen Elementes;
Fig. 8: eine schematische Darstellung eines elektrisch leitfähigen Elementes gemäß einer Ausführungsform.

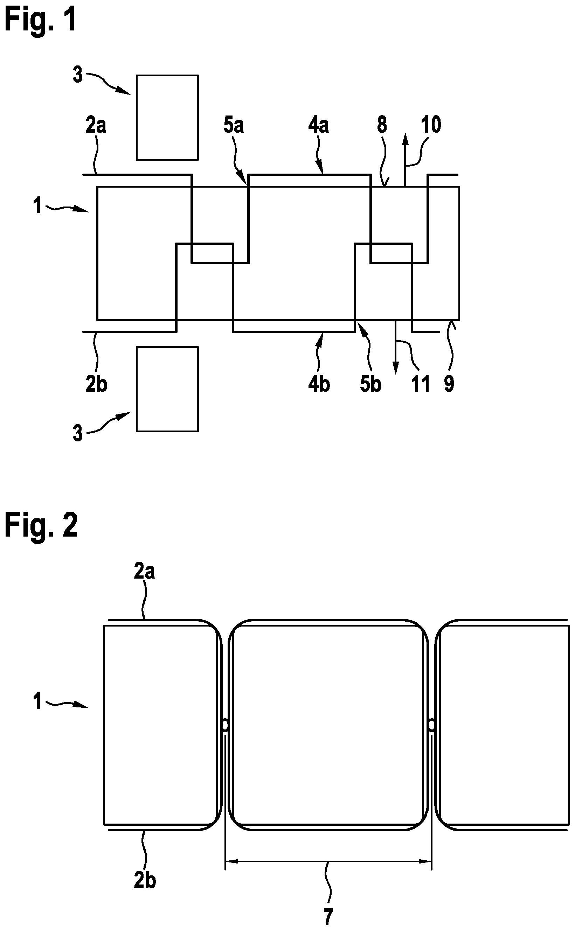

In der Figur 1 ist eine Nahterzeugungsvorrichtung 3 zur Anwendung in einem erfindungsgemäßen Verfahren schematisch dargestellt. In der Figur 1 ist ferner eine Reifenkomponente 1 dargestellt. Die Reifenkomponente 1 ist aus einer kautschukbasierten Mischung ausgebildet.

Die Nahterzeugungsvorrichtung 3 ist dazu vorgesehen, ein erstes elektrisch leitfähiges Element 2a und ein zweites elektrisch leitfähiges Element 2b in die Reifenkomponente 1 einzunähen. Dabei ist die Nahterzeugungsvorrichtung 3 ferner dazu vorgesehen, das erste elektrisch leitfähige Element 2a mit dem zweiten elektrisch leitfähigen Element 2b derart zu vernähen, dass das erste elektrisch leitfähige Element 2a in Kontakt mit dem zweiten elektrisch leitfähigen Element 2b steht. Dabei werden das erste elektrisch leitfähige Element 2a und das zweite elektrisch leitfähige Element 2b mittels der Nahterzeugungsvorrichtung 3 in die Reifenkomponente 1 vernäht, wobei durch das Einnähen Bereiche 4a des ersten elektrisch leitfähigen Elementes 2a auf ersten Oberflächenbereichen 5a einer ersten Oberfläche 8 der Reifenkomponente 1 angeordnet werden und Bereiche 4b des zweiten elektrisch leitfähigen Elementes 2b auf zweiten Oberflächenbereichen 5b einer zweiten Oberfläche 9 der Reifenkomponente 1 derart angeordnet werden, dass die Bereiche 4a, 4b des ersten elektrisch leitfähigen Elementes 2a und des zweiten elektrisch leitfähigen Elementes 2b elektrisch leitfähig miteinander verbunden sind.

Gemäß der in der Figur 1 schematisch dargestellten Ausführungsform weisen ein Normalvektor 10 der ersten Oberfläche 8 und ein Normalvektor 11 der zweiten Oberfläche 9 in zueinander entgegengesetzte Richtungen.

In der Figur 2 ist eine Nahterzeugungsvorrichtung 3 zur Durchführung eines erfindungsgemäßen Verfahrens und eine Reifenkomponente 1 gemäß einer weiteren Ausführungsform schematisch dargestellt. Gemäß der Darstellung in der Figur 2 sind das erste elektrische leitfähige Element 2a und das zweite elektrisch leitfähige Element 2b jeweils in einem Stichabstand 7 von 3 cm bis 10 cm in die Reifenkomponente 1 eingenäht worden.

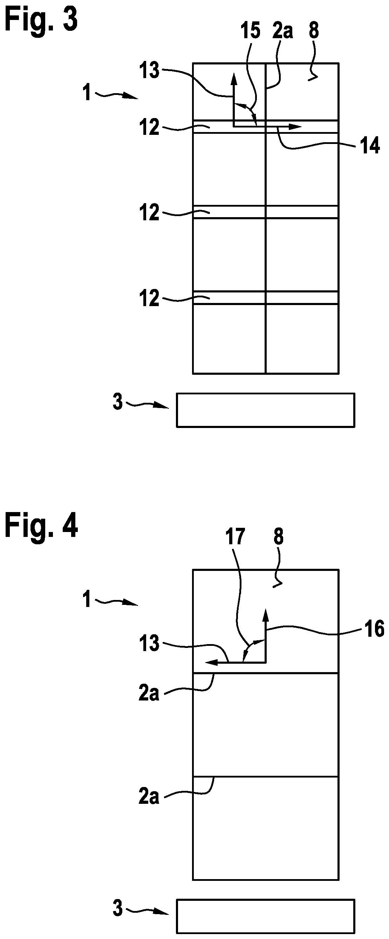

In der Figur 3 sind eine Nahterzeugungsvorrichtung 3 und eine elektrisch leitfähige Reifenkomponente 1 gemäß einer weiteren Ausführungsform schematisch dargestellt. Gemäß der Darstellung in der Figur 3 weist die Reifenkomponente 1 Festigkeitsträger 12 auf. Das erste elektrisch leitfähige Element 2a und das zweite elektrisch leitfähige Element 2b sind derart durch die Reifenkomponente 1 genäht worden, dass eine Nahtrichtung 13 mit einer Haupterstreckungsrichtung 14 der Festigkeitsträger 12 einen Winkel 15 von 80° bis 100° und insbesondere 90° einschließt. Gemäß der Darstellung in der Figur 3 sind die Oberfläche 8 und das erste elektrisch leitfähige Element 2a dargestellt. Die Nahtrichtung 13 ist die Richtung, in die das erste elektrisch leitfähige Element 2a und das zweite elektrisch leitfähige Element 2b entlang der Reifenkomponente 1 miteinander vernäht werden.

In der Figur 4 sind eine Nahterzeugungsvorrichtung 3 und eine Reifenkomponente 1 gemäß einer weiteren Ausführungsform schematisch dargestellt. Gemäß der Darstellung in der Figur 4 handelt es sich bei der Reifenkomponente 1 um eine kalandrierte Reifenkomponente 1. Das erste elektrisch leitfähige Element 2 a und das zweite elektrisch leitfähige Element 2 b sind derart durch die Reifenkomponente 1 genäht worden, dass eine Nahtrichtung 13 mit einer Kalandrierrichtung 16 der Reifenkomponente 1 einen Winkel 17 von 80° bis 100° und insbesondere 90° einschließt.

Gemäß der Darstellung in der Figur 4 sind die Oberfläche 8 und das erste elektrisch leitfähige Element 2a dargestellt.

Die Kalandrierrichtung 16 der Reifenkomponente 1 ist die Richtung, in die die Reifenkomponente 1 mittels eines Kalanders kalandriert wird oder kalandriert worden ist.

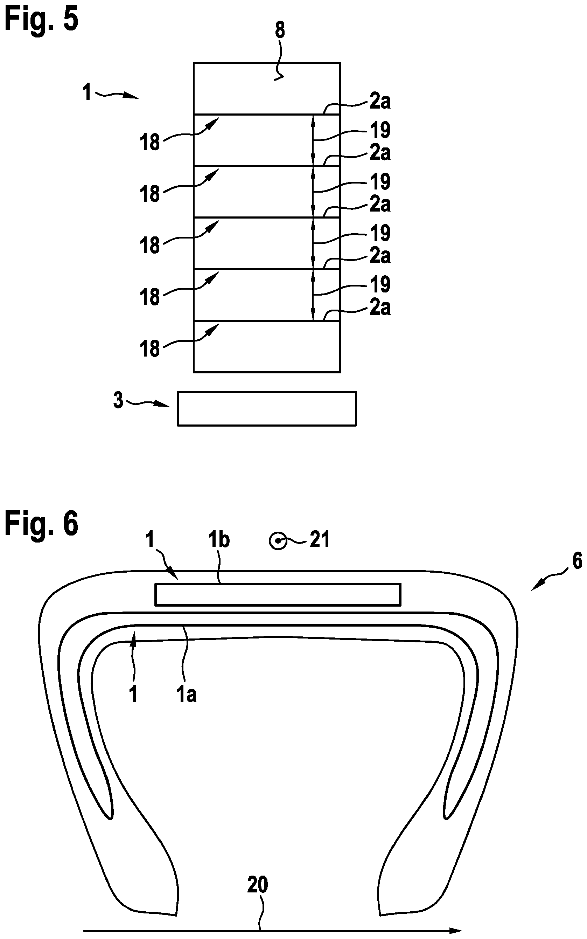

In der Figur 5 sind eine Nahterzeugungsvorrichtung 3 und eine Reifenkomponente 1 gemäß einer weiteren Ausführungsform schematisch dargestellt. Die Darstellung der Figur 5 zeigt, dass das erste elektrisch leitfähige Element 2a und das zweite elektrisch leitfähige Element 2b in einzelnen Nahtreihen 18 durch die Reifenkomponente 1 genäht worden sind. Die Nahtreihen 18 verlaufen parallel zueinander. Ein Abstand 19 der Nahtreihen 18 voneinander beträgt 30 cm bis 50 cm.

Gemäß der Darstellung in der Figur 5 sind die Oberfläche 8 und das erste elektrisch leitfähige Element 2a dargestellt.

In der Figur 6 ist ein erfindungsgemäßer Reifen 6 schematisch in Radialschnittansicht dargestellt. Der Reifen 6 ist um eine Rotationsachse 20 in eine Umlaufrichtung 21 rotierbar. Der Reifen 6 weist gemäß der in der Figur 6 dargestellten Ausführungsform zwei erfindungsgemäße Reifenkomponenten 1 auf, wobei es sich bei einer ersten Reifenkomponente 1 um eine Reifenkarkasse 1a und bei einer zweiten Reifenkomponente 1 um einen Reifengürtel 1b handelt.

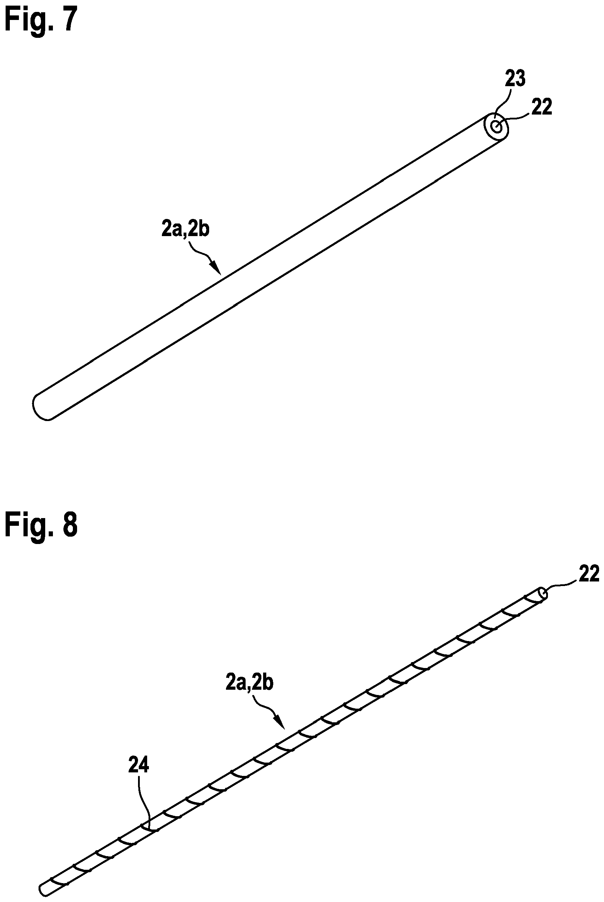

In der Figur 7 ist ein elektrisch leitfähiges Element 2a oder 2b schematisch dargestellt. Gemäß der Darstellung in der Figur 7 weist das elektrisch leitfähige Element 2a oder 2b einen Grundkörper 22 auf. Wobei um den Grundkörper eine Beschichtung 23 angeordnet worden ist. Der Grundkörper 22 ist beispielsweise aus einem Polyester ausgebildet, bei der Beschichtung 23 handelt es sich insbesondere um eine Rußbeschichtung.

In der Figur 8 ist ein elektrisch leitfähiges Element 2a oder 2b gemäß einer weiteren Ausführungsform schematisch dargestellt. Gemäß der Darstellung in der Figur 8 ist um den Grundkörper 22 herum eine Litze 24 wendelförmig gewickelt worden. Der Grundkörper 22 ist insbesondere aus einem Polyester ausgebildet worden. Bei der Litze 24 handelt es sich beispielsweise um eine Karbon-Litze, um eine Kupfer-Litze oder um eine Stahl-Litze.

### Bezugszeichenliste

### (ist Teil der Beschreibung)

- 1: Reifenkomponente
- 1a: Reifenkarkasse
- 1b: Reifengürtel
- 2a: erstes elektrisch leitfähiges Element
- 2b: zweites elektrisch leitfähiges Element
- 3: Nahterzeugungsvorrichtung
- 4a: Bereiche des ersten elektrisch leitfähigen Elementes
- 4b: Bereiche des zweiten elektrisch leitfähigen Elementes
- 5a: erste Oberflächenbereiche der Reifenkomponente
- 5b: zweite Oberflächenbereiche der Reifenkomponente
- 6: Reifen
- 7: Stichabstand
- 8: erste Oberfläche der Reifenkomponente
- 9: zweite Oberfläche der Reifenkomponente
- 10: Normalvektor der ersten Oberfläche der Reifenkomponente
- 11: Normalvektor der zweiten Oberfläche der Reifenkomponente
- 12: Festigkeitsträger
- 13: Nahtrichtung
- 14: Haupterstreckungsrichtung der Festigkeitsträger
- 15: Winkel
- 16: Kalandrierrichtung
- 17: Winkel
- 18: Nahtreihen
- 19: Abstand
- 20: Rotationsachse
- 21: Umlaufrichtung
- 22: Grundkörper
- 23: Beschichtung
- 24: Litze

## Patentansprüche

1. Verfahren zur Herstellung einer elektrisch leitfähigen Reifenkomponente (1), aufweisend die folgenden Schritte:
- Bereitstellen einer Reifenkomponente (1), wobei die Reifenkomponente (1) aus einer kautschukbasierten Mischung ausgebildet ist;
- Bereitstellen eines ersten elektrisch leitfähigen Elementes (2a) und eines zweiten elektrisch leitfähigen Elementes (2b);
- Bereitstellen einer Nahterzeugungsvorrichtung (3), wobei die Nahterzeugungsvorrichtung (3) dazu vorgesehen ist, das erste elektrisch leitfähige Element (2a) und das zweite elektrisch leitfähige Element (2b) in die Reifenkomponente (1) einzunähen und dabei das erste elektrisch leitfähige Element (2a) mit dem zweiten elektrisch leitfähigen Element (2b) derart zu vernähen, dass das erste elektrisch leitfähige Element (2a) in Kontakt mit dem zweiten elektrisch leitfähigen Element (2b) steht;
- Einnähen des ersten elektrisch leitfähigen Elementes (2a) und des zweiten elektrisch leitfähigen Elementes (2b) in die Reifenkomponente (1) mittels der Nahterzeugungsvorrichtung (3), wobei durch das Einnähen Bereiche (4a) des ersten elektrisch leitfähigen Elementes (2a) auf ersten Oberflächenbereichen (5a) der Reifenkomponente (1) angeordnet werden und Bereiche (4b) des zweiten elektrisch leitfähigen Elementes (2b) auf zweiten Oberflächenbereichen (5b) der Reifenkomponente (1) angeordnet werden, derart, dass die Bereiche (4a, 4b) elektrisch leitfähig miteinander verbunden sind;
- **dadurch gekennzeichnet, dass** die Reifenkomponente (1) kalandriert wird, so dass das erste elektrisch leitfähige Element (2a) und das zweite elektrisch leitfähige Element (2b) derart durch die Reifenkomponente (1) genäht werden, dass eine Nahtrichtung (13) mit einer Kalandrierrichtung (16) der Reifenkomponente (1) einen Winkel (17) von 80° bis 100° und insbesondere 90° einschließt.

2. Verfahren nach Anspruch 1, **dadurch gekennzeichnet, dass** es sich es sich bei dem ersten elektrisch leitfähigen Element (2a) und dem zweiten elektrisch leitfähigen Element (2b) um ein Garn oder um einen Draht handelt.

3. Verfahren nach Anspruch 1 oder Anspruch 2, **dadurch gekennzeichnet, dass** das erste elektrisch leitfähige Element (2a) und das zweite elektrisch leitfähige Element (2b) jeweils aus einem Polyester (22) ausgebildet sind, wobei das Polyester (22) eine Rußbeschichtung (23) aufweist oder das Polyester (22) mit einer Karbon-Litze (24) umwickelt worden ist oder das Polyester (22) mit einer Kupfer-Litze (24) umwickelt worden ist oder das Polyester (22) mit einer Stahl-Litze (24) umwickelt worden ist.

4. Verfahren nach einem der vorhergehenden Ansprüche, **dadurch gekennzeichnet, dass** das erste elektrisch leitfähige Element (2a) und das zweite elektrisch leitfähige Element (2b) jeweils in einem Stichabstand (7) von 3 cm bis 10 cm in die Reifenkomponente (1) eingenäht werden.

5. Verfahren nach einem der vorhergehenden Ansprüche, **dadurch gekennzeichnet, dass** das erste elektrisch leitfähige Element (2a) und das zweite elektrisch leitfähige Element (2b) derart durch die Reifenkomponente (1) genäht werden, dass durch das Einnähen Bereiche (4a) des ersten elektrisch leitfähigen Elementes (2a) auf Oberflächenbereichen (5a, 5b) einer ersten Oberfläche (8) der Reifenkomponente (1) angeordnet werden und Bereiche (4b) des zweiten elektrisch leitfähigen Elementes (2b) auf Oberflächenbereichen (5) einer zweiten Oberfläche (9) der Reifenkomponente (1) angeordnet werden, wobei ein Normalvektor (10) der ersten Oberfläche (8) und ein Normalvektor (11) der zweiten Oberfläche (9) in entgegengesetzte Richtungen weisen.

6. Verfahren nach einem der vorhergehenden Ansprüche, **dadurch gekennzeichnet, dass** für den Fall, wonach die Reifenkomponente (1) Festigkeitsträger (12) aufweist, das erste elektrisch leitfähige Element (2a) und das zweite elektrisch leitfähige Elemente (2b) derart durch die Reifenkomponente (1) genäht werden, dass eine Nahtrichtung (13) mit einer Haupterstreckungsrichtung (14) der Festigkeitsträger (12) einen Winkel (15) von 80° bis 100° und insbesondere 90° einschließt.

7. Verfahren nach einem der vorhergehenden Ansprüche, **dadurch gekennzeichnet, dass** das erste elektrisch leitfähige Element (2a) und das zweite elektrisch leitfähige Element (2b) in einzelnen Nahtreihen (18) durch die Reifenkomponente (1) genäht werden, wobei die Nahtreihen (18) parallel zu einander verlaufen und einen Abstand (19) voneinander aufweisen, wobei der Abstand (19) insbesondere 30 cm bis 50 cm beträgt.

8. Verfahren nach einem der vorhergehenden Ansprüche, **dadurch gekennzeichnet, dass** es sich bei der Reifenkomponente (1) um eine Reifenkarkasse (1a) oder um einen Reifengürtel (1b) handelt.

9. Reifenkomponente (1, 1a, 1b), hergestellt nach einem der Verfahren der vorhergehenden Ansprüche.

10. Reifen (6), aufweisend mindestens eine Reifenkomponente (1, 1a, 1b) nach dem vorhergehenden Anspruch.

## Claims

1. Method for producing an electrically conductive tyre component (1), comprising the following steps:
- providing a tyre component (1), wherein the tyre component (1) is formed from a rubber-based compound;
- providing a first electrically conductive element (2a) and a second electrically conductive element (2b);
- providing a seam generating device (3), wherein the seam generating device (3) is intended for sewing the first electrically conductive element (2a) and the second electrically conductive element (2b) into the tyre component (1) and thereby stitching the first electrically conductive element (2a) to the second electrically conductive element (2b) in such a way that the first electrically conductive element (2a) is in contact with the second electrically conductive element (2b);
- sewing the first electrically conductive element (2a) and the second electrically conductive element (2b) into the tyre component (1) by means of the seam generating device (3), wherein regions (4a) of the first electrically conductive element (2a) are arranged on first surface regions (5a) of the tyre component (1) and regions (4b) of the second electrically conductive element (2b) are arranged on second surface regions (5b) of the tyre component (1) by the sewing in such a way that the regions (4a, 4b) are electrically conductively connected to one another;
- **characterized in that** the tyre component (1) is calendered, such that the first electrically conductive element (2a) and the second electrically conductive element (2b) are sewn through the tyre component (1) in such a way that a sewing direction (13) encloses an angle (17) of 80° to 100° and in particular 90° with a calendering direction (16) of the tyre component (1).

2. Method according to Claim 1, **characterized in that** the first electrically conductive element (2a) and the second electrically conductive element (2b) are a yarn or a wire.

3. Method according to Claim 1 or Claim 2, **characterized in that** the first electrically conductive element (2a) and the second electrically conductive element (2b) are each formed from a polyester (22), wherein the polyester (22) has a carbon black coating (23) or a carbon strand (24) has been wound around the polyester (22) or a copper strand (24) has been wound around the polyester (22) or a steel strand (24) has been wound around the polyester (22).

4. Method according to one of the preceding claims, **characterized in that** the first electrically conductive element (2a) and the second electrically conductive element (2b) are each sewn into the tyre component (1) at a stitch spacing (7) of 3 cm to 10 cm.

5. Method according to one of the preceding claims, **characterized in that** the first electrically conductive element (2a) and the second electrically conductive element (2b) are sewn through the tyre component (1) in such a way that regions (4a) of the first electrically conductive element (2a) are arranged on surface regions (5a, 5b) of a first surface (8) of the tyre component (1) and regions (4b) of the second electrically conductive element (2b) are arranged on surface regions (5) of a second surface (9) of the tyre component (1) by the sewing, wherein a normal vector (10) of the first surface (8) and a normal vector (11) of the second surface (9) point in opposite directions.

6. Method according to one of the preceding claims, **characterized in that**, for the case where the tyre component (1) comprises strength members (12), the first electrically conductive element (2a) and the second electrically conductive element (2b) are sewn through the tyre component (1) in such a way that a sewing direction (13) encloses an angle (15) of 80° to 100° and in particular 90° with a main extent direction (14) of the strength members (12).

7. Method according to one of the preceding claims, **characterized in that** the first electrically conductive element (2a) and the second electrically conductive element (2b) are sewn through the tyre component (1) in individual seam rows (18), wherein the seam rows (18) run parallel to one another and have a spacing (19) from one another, wherein the spacing (19) is in particular 30 cm to 50 cm.

8. Method according to one of the preceding claims, **characterized in that** the tyre component (1) is a tyre carcass (1a) or a tyre belt (1b).

9. Tyre component (1, 1a, 1b), produced by one of the methods of the preceding claims.

10. Tyre (6) comprising at least one tyre component (1, 1a, 1b) according to the preceding claim.

## Revendications

1. Procédé de fabrication d'un composant de pneu (1) électriquement conducteur, comprenant les étapes suivantes :
- fourniture d'un composant de pneu (1), le composant de pneu (1) étant formé à partir d'un mélange à base de caoutchouc ;
- fourniture d'un premier élément électriquement conducteur (2a) et d'un deuxième élément électriquement conducteur (2b) ;
- fourniture d'un dispositif de génération de couture (3), le dispositif de génération de couture (3) étant prévu pour coudre le premier élément électriquement conducteur (2a) et le deuxième élément électriquement conducteur (2b) dans le composant de pneu (1) et coudre ainsi le premier élément électriquement conducteur (2a) avec le deuxième élément électriquement conducteur (2b) de telle sorte que le premier élément électriquement conducteur (2a) soit en contact avec le deuxième élément électriquement conducteur (2b) ;
- couture du premier élément électriquement conducteur (2a) et du deuxième élément électriquement conducteur (2b) dans le composant de pneu (1) au moyen du dispositif de formation de couture (3), des zones (4a) du premier élément électriquement conducteur (2a) étant, par la couture, disposées sur des premières zones de surface (5a) du composant de pneu (1) et des zones (4b) du deuxième élément électriquement conducteur (2b) étant disposées sur des deuxièmes zones de surface (5b) du composant de pneu (1), de telle sorte que les zones (4a, 4b) sont reliées entre elles de manière électriquement conductrice ;
- **caractérisé en ce que** le composant de pneu (1) est calandré de telle sorte que le premier élément électriquement conducteur (2a) et le deuxième élément électriquement conducteur (2b) sont cousus à travers le composant de pneu (1) de telle sorte qu'une direction de couture (13) forme un angle (17) de 80° à 100°, et notamment de 90°, avec une direction de calandrage (16) du composant de pneu (1).

2. Procédé selon la revendication 1, **caractérisé en ce que** le premier élément électriquement conducteur (2a) et le deuxième élément électriquement conducteur (2b) sont un fil ou un fil métallique.

3. Procédé selon la revendication 1 ou la revendication 2, **caractérisé en ce que** le premier élément électriquement conducteur (2a) et le deuxième élément électriquement conducteur (2b) sont respectivement formés à partir d'un polyester (22), le polyester (22) possédant un revêtement de noir de carbone (23) ou le polyester (22) ayant été enveloppé d'un toron de carbone (24) ou le polyester (22) ayant été enveloppé d'un toron de cuivre (24) ou le polyester (22) ayant été enveloppé d'un toron d'acier (24).

4. Procédé selon l'une des revendications précédentes, **caractérisé en ce que** le premier élément électriquement conducteur (2a) et le deuxième élément électriquement conducteur (2b) sont respectivement cousus dans le composant de pneu (1) à un intervalle de points (7) de 3 cm à 10 cm.

5. Procédé selon l'une des revendications précédentes, **caractérisé en ce que** le premier élément électriquement conducteur (2a) et le deuxième élément électriquement conducteur (2b) sont cousus à travers le composant de pneu (1) de telle sorte que, par la couture, des zones (4a) du premier élément électriquement conducteur (2a) sont disposées sur des zones de surface (5a, 5b) d'une première surface (8) du composant de pneu (1) et des zones (4b) du deuxième élément électriquement conducteur (2b) sont disposées sur des zones de surface (5) d'une deuxième surface (9) du composant de pneu (1), un vecteur normal (10) de la première surface (8) et un vecteur normal (11) de la deuxième surface (9) étant orientés dans des directions opposées.

6. Procédé selon l'une des revendications précédentes, **caractérisé en ce que** dans le cas où le composant de pneu (1) possède des supports de renfort (12), le premier élément électriquement conducteur (2a) et le deuxième élément électriquement conducteur (2b) sont cousus à travers le composant de pneu (1) de telle sorte qu'une direction de couture (13) forme un angle (15) de 80° à 100°, et notamment de 90°, avec une direction d'extension principale (14) des supports de renfort (12).

7. Procédé selon l'une des revendications précédentes, **caractérisé en ce que** le premier élément électriquement conducteur (2a) et le deuxième élément électriquement conducteur (2b) sont cousus en rangées de couture (18) individuelles à travers le composant de pneu (1), les rangées de couture (18) suivant un tracé parallèle les unes aux autres et présentant un écart (19) les unes par rapport aux autres, l'écart (19) étant notamment de 30 cm à 50 cm.

8. Procédé selon l'une des revendications précédentes, **caractérisé en ce que** le composant de pneu (1) est une carcasse de pneu (1a) ou une nappe d'armature de pneu (1b).

9. Composant de pneu (1, 1a, 1b), fabriqué selon l'un des procédés des revendications précédentes.

10. Pneu (6), comprenant au moins un composant de pneu (1, 1a, 1b) selon la revendication précédente.
